Europäisches Patentamt

European Patent Office

Office européen des brevets

(11) Publication number: **0 184 401**
**A2**

(12) **EUROPEAN PATENT APPLICATION**

(21) Application number: **85308720.3**

(22) Date of filing: **29.11.85**

(51) Int. Cl.⁴: **G 01 V 1/18**
**G 01 H 11/02**

(30) Priority: **30.11.84 US 676645**

(43) Date of publication of application:
**11.06.86 Bulletin 86/24**

(84) Designated Contracting States:
**BE DE FR GB IT NL**

(71) Applicant: **OYO CORPORATION, U.S.A.**
**7334 North Gessner**
**Houston Texas 77040(US)**

(72) Inventor: **Hall, Ernest M., Jr.**
**1 Inwood Oaks**
**Houston Texas, 77024(US)**

(74) Representative: **Rooney, Paul Blaise et al,**
**D.Young & Co. 10 Staple Inn**
**London WC1V 7RD(GB)**

(54) **Variflux vibration transducer.**

(57) A vibration transducer (10,50) is disclosed which comprises a hollow casing, and spring means, coil means, a non-magnetic conductor, and a permanent magnet, all positioned inside the casing. The coil means (20) and the magnet are stationary relative to the casing (12,52), and the spring means (34-34', 66) elastically support the non-magnetic electric conductor (32,60) for axial movements relative to the magnet (16,56), whereby eddy currents become induced in the conductor which generate electric signals in the coil means in response to relative movements between the conductor and the magnet, the signals being proportional to a parameter of the axial movements.

The parameter is acceleration and the transducer has a frequency response which provides a continuously increasing sensitivity for increasing frequency of seismic energy imparted into the earth, thereby substantially overcoming the normal earth's attenuation of higher frequencies.

Fig. 4

0184401

## VARIFLUX VIBRATION TRANSDUCER

This invention generally relates to an electromagnetic vibration transducer, and to a method of transducing vibrations, and, in particular, to such transducers which have one element supported by springs for movement relative to another element thereof.

Seismometers which sense vibrations or tremors of the earth include two elements: one element is coupled to the earth for moving with it, and the inertia of the other element resists such movement. Under ideal conditions, the inertia element remains stationary while the other element moves with the earth. The relative movement between the two elements is a faithful measure of the movement of the earth.

Attempts have been made to develop seismometers wherein the inertia element includes the magnet and its magnetic circuit, see for example U.S.A. patents 3,577,184 and 3,878,504. It has also been suggested to fix the coil to the magnet and to its pole pieces, as in U.S.A. patents 2,130,213 and 2,759,167. If they have ever been built, these seismometers have not met with any commercial success.

In present day seismometers, the element that moves with the earth includes a magnet, while the inertia element, which tends to remain stationary, includes a coil situated in the airgaps of the magnetic circuit. The relative motion between this coil and magnetic field induces a signal in the coil which is a measure of the earth's movement. Seismometers having moving coils suffer from well known problems:

Problem 1. When seismometers are poorly coupled to the ground, the signals which they produce are not truly proportional to the earth's movement. Better results can be obtained from a seismometer having a relatively heavy inertia element. But in presently used seismometers, the weight of the mass-coil (coilform and coil thereon) is typically small in comparison to the total weight of the seismometer. For example, the ratio between the mass of the inertia element and the total mass of the seismometer normally is only about 10% to 15%. It has been desired for a long time to increase this ratio so that the seismometer would move in better unison with the earth, while its inertia mass remains stationary. One of the objects of this invention is to increase substantially this ratio.

Problem 2. The practice of interconnecting seismometers in groups to form arrays causes the seismometers to "communicate" with each other. This means that the mechanical excitation of one seismometer in the group electrically energizes and moves the coils in all the other groups. Obviously, when the excitation of one seismometer is due to noise, all the other seismometers in the group will also pick up the same noise.

Therefore, it is a further object of this invention to eliminate this communication problem between interconnected seismometers.

Problem 3. Most seismometers use either slip rings or pig tails which are small, spirally wound wires that provide electric continuity to the moving coils. It is a further object of this invention to preserve the advantages offered by the slip ring and the pig tail connections while eliminating their known disadvantages.

Problem 4. Generally, most present day seismometers attenuate, at about 12 db per octave, signals having frequencies below their natural frequencies. It is an object of this invention to greatly increase this attenuation.

Problem 5. As seismic signals propogate through the earth, the earth attenuates the higher frequencies at a faster rate than it attenuates the lower frequencies.

It is a very important object of this invention to provide a novel vibration transducer whose frequency response has a higher sensitivity to higher frequencies than to lower frequencies, thereby automatically compensating for the higher attenuation by the earth of the higher frequency signals.

The invention is further described in connection with the accompanying drawings, wherein:

FIGURE 1 is a perspective view of a preferred embodiment of the vibration transducer of the invention;

FIGURES 2 and 3 are sectional views of the transducer along lines 2-2 and 3-3 in 1, respectively, showing the springs in their opposed extreme modes in response to opposed extreme excitations applied to the transducer;

FIGURE 4 is an exploded view of the transducer;

FIGURE 5 is a view similar to FIGURE 2 but of a modified transducer utilizing a coil assembly without a coilform, the transducer being shown with its springs in their non-excited condition;

FIGURE 6 is a perspective view of yet another embodiment of the transducer;

FIGURE 7 is a sectional view taken along line 7-7 in FIGURE 6;

FIGURE 8 is an exploded view of the transducer shown in FIGURE 6; and

FIGURE 9 is a sectional view similar to FIGURE 7 but of another modified embodiment utilizing a pair of spider springs.

To simplify the description, symmetrical parts are designated with a "prime" ('), and their description will be limited to a minimum.

The preferred embodiment of the novel variflux vibration transducer 10 comprises a case 12 of magnetic material which is terminated in end caps 14-14' of non-magnetic material to form a fluid-tight housing 15.

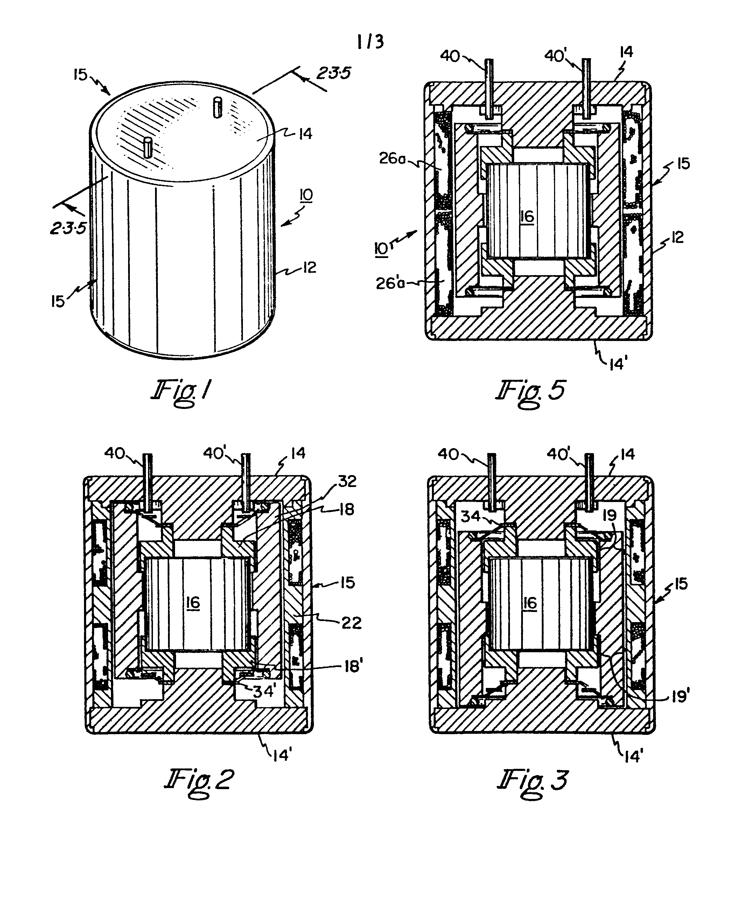

The magnetic circuit of transducer 10 comprises a cylindrical permanent magnet 16, pole pieces 18-18', airgaps 19-19' (FIGURE 3) and case 12.

The Z-shaped pole pieces 18-18' captivate magnet 16 and provide means for centering the magnet with respect to case 12. In the magnetic circuit the flux lines flow between the north pole of magnet 16 through the upper pole piece 18, the upper airgap 19, case 12, the lower airgap 19', the lower pole piece 18', and the magnet's south pole. The construction of this magnetic circuit is conventional for dual coil seismometers.

There is also provided a coil assembly 20, which includes a cylindrical coilform 22 made of a non-magnetic material of thin cross section. A dividing shoulder radially extends outwardly from the center of coilform 22 to provide a pair of spaces 24-24'. Within spaces 24-24' are situated windings 26-26', respectively, which are made of equal axial length and are formed of the same number of turns and of the same size of insulated wire.

Although two windings 26-26' are shown, it is contemplated that a single winding may be employed which reverses direction at its center. Another possibility is to connect windings 26-26' in series and in the proper phase relationship, so as to bring out from these windings only two wires 27-27' instead of the usual four.

In accordance with the present invention, an annular inertia member 30, preferably in the form of a cylindrical slug 32, surrounds magnet 16 and is situated within airgaps 19-19' coaxially with magnet 16 and with coilform 22. Slug 32 fills most of the space within airgaps 19-19', but sufficient clearance remains to permit slug 32 to move vertically without rubbing or dragging over magnet 16 or pole pieces 18-18' on one side, and/or over coilform 22 on the opposite side. No space is provided between coilform 22 and the inner cylindrical wall 13 of case 12.

Slug 32 is resiliently suspended from a pair of upper and lower disc-shaped, preformed spider springs 34-34', typically made of beryllium copper. The outer periphery 35 of each disc is above inner periphery 36. Any other known spring suspension system can be substituted for the spider springs 34-34'.

It is the function of the spring system to coaxially maintain slug 32 in airgaps 19-19', and to elastically support slug 32 for axial movement relative to coaxial magnet 16 and coaxial coilform 22.

End caps 14-14' have axially aligned guide posts 11 provided with spring-locking shoulders 17. Each pole piece captures the inner periphery 36 against its shoulder 17, and magnet 16 is captivated between pole pieces 18-18'. The outer peripheries 35 of spiders 34-34' are fixed to the opposite ends of slug 32 by snap rings 38-38', which respectively hold them in position. Snap rings 38-38' are located within annular grooves 39-39' of slug 32. This arrangement keeps slug 32 aligned during its axial excursions and centers it with respect to the remainder of the parts in transducer 10.

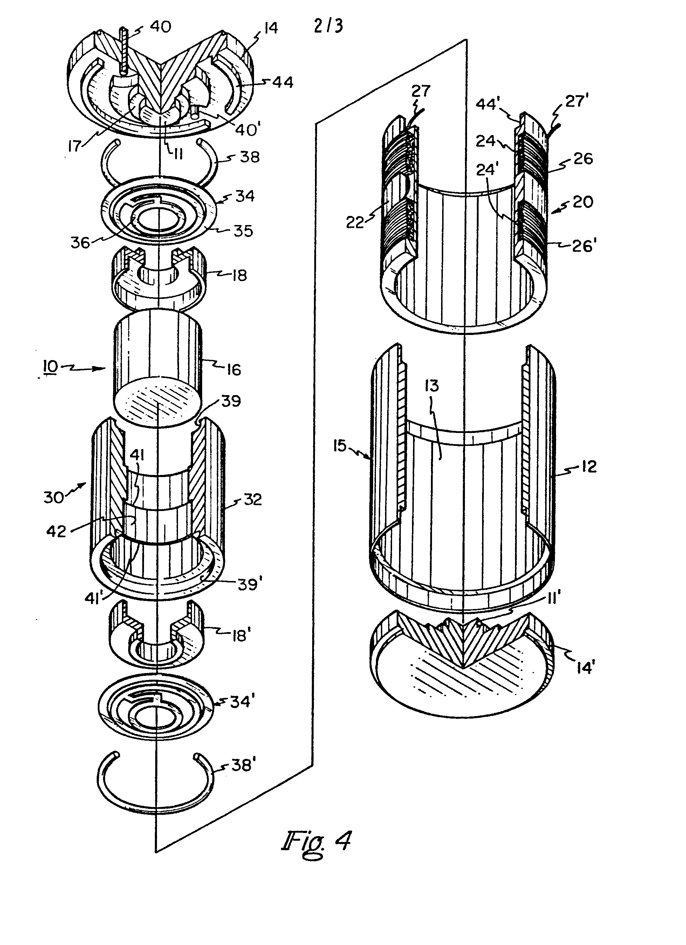

The transducer's components are pressure-fitted and stacked inside each other, thereby requiring a minimum of assembly time and relatively unskilled labor. Shoulder 44 in end cap 14 (FIGURE 4) locks against mating shoulder 44' in coilform 22.

The arrangement of the parts is symmetrical relative to both the horizontal and vertical planes passing through the center of magnet 16, and therefore transducer 10 generates a minimum of second harmonic components, This symmetrical arrangement of the parts lends important manufacturing and operational advantages, which considerably lower the cost of manufacturing transducer 10.

Also, when transducers 10 are interconnected and become uniformly excited, the signals induced within their coils 20 will be substantially in phase.

Stationary terminals 40-40' are affixed to end cap 14. Both cap 14 and coilform 22 are structurally fixed to cylindrical case 12. No relative motion is permitted between coil assembly 20 and terminals 40-40'. For this reason, output wires 27-27' of assembly 20 can be soldered to output terminals 40-40' to thereby obtain a very important advantage over conventional moving coil type seismometers.

The above mentioned and other apparent advantages of this invention contribute significantly to greater reliability, reduced manufacturing costs, and permit transducer 10 as well as the modified embodiments of this invention to be lightweight, small and yet rugged.

It will be observed from the drawings that inertia slug 32 is free to move in an axial direction within predetermined limits which are determined by the opposite edges 41- 41' on shoulder 42 of slug 32 (FIGURE 4) and by the inner peripheries of pole pieces 18-18'.

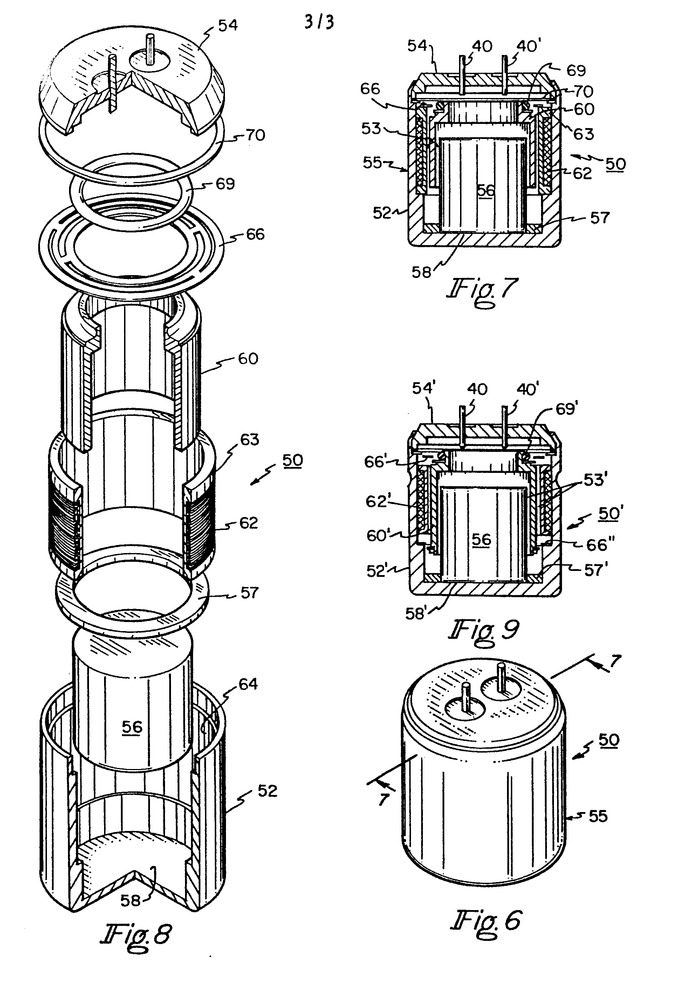

In the modified embodiment 10' of FIGURE 5, windings 26a, 26'a can be cast against inner cylindrical wall 13 of case 12 without the use of a coilform 22. The remaining parts in transducer 10' are identical to those of transducer 10.

While transducers 10 and 10' are responsive to vertical motion, they can also become adapted for horizontal motion. The selection of springs 34-34', their thickness and weight, together with other internal designs for converting transducer 10 into a horizontal transducer are well understood in the art.

It is helpful to think of inertia slug 32 as one element of transducer 10, and of the remaining parts as constituting another element. These two elements are capable of relative movement.

Magnet 16 generates a constant magnetic field in the airgaps 19-19' between pole pieces 18-18' and case 12. When slug 32 is at rest, no signal is induced in coil 20. Mechanical excitation or vibration produces relative movement between the one element (slug 32) and the other element (the rest of transducer 10). This relative movement induces in slug 32 eddy currents of variable amplitude.

The magnetic fields produced by such variable eddy currents are proportional to the velocities of such movements.

Windings 26-26' in airgaps 19-19' intercept the changing magnetic fields produced by the eddy currents in slug 32. As a result, the currents or voltages induced in windings 26-26' will be proportional to the acceleration, i.e., the rate of change of the velocity of slug 32.

By suitably proportioning the parts so that they develop a uniform magnetic field in airgaps 19-19', whereby the number of lines of magnetic flux cut by slug 32 is uniform over its operating range, the output voltage from coil 20 will be substantially proportional to the acceleration of the earth movements detected by case 12.

A transducer 10 was constructed which had a 2.22cm diameter, a 2.54cm height, a 16gr coil assembly 20 , and a total 49gr weight. Magnet 16 had a 1.02cm diameter, a 1.02cm length, and was situated in a 1.17cm bore within slug 32. Coilform 22 was 2.03cm long. Windings 26-26' were 0.38cm apart and spaced 0.17cm from the ends of the coilform. Case 12 was made of soft iron and had a 2.22cm outside diameter and a 2.03cm inside diameter. Magnet 16 was of Alnico IX, and each of windings 26-26' consisted of 750 turns of No.39 AWG wire. Slug 32 was 1.8cm long, had a 1.6cm diameter and was made of leaded copper known as ASTM-B-187.

As previously mentioned, in present day seismometers, the weight of the mass-coil (coilform and coil thereon) is typically small compared to the total weight of the seismometer. For example, the inertia mass normally is only about 10% to 15% of the total mass of the seismometer. But, this invention allows to increase this mass ratio. Hence, the novel seismometer moves in better unison with the earth, while its inertia mass remains stationary.

To take advantage of the invention in this respect, the mass of slug 32 should preferably be between 20% to 50% of the total mass of transducer 10, which results in a more faithful output electric signal in response to mechanical excitation imparted by the earth to case 12. The preferred mass value for slug 32 within that range is 35% of the total mass of transducer 10.

Coil 20 appears at terminals 40-40' as a resistive load because it has no relative movement with air gaps 19-19'. Therefore, when transducers 10 are excited uniformly, they produce predictable signals which are in phase, and which have a minimum of harmonics. This is in contrast to current commercial moving-coil-type seismometers, which have impedances that are a function of frequency and damping.

Interconnected transducers 10 do not "communicate" with each other in response to mechanical excitation applied to only one transducer within a group, because coils 20 in all the other transducers are locked and cannot induce a motional response in inertia members 30 in response to an electrical energization.

According to this invention, mechanical excitation, which may be a noise burst administered to one transducer 10 only, will not subject all the other transducers in the group to this noise burst, whereas a moving-coil-type transducer suffers from the problem of one transducer electrically driving all the other transducers in the group.

The composite output electric signal of the group constitutes a composite measure of the relative movements of the inertia members 30 in the individual transducers 10 forming the group, without the motion of any one inertia element 30 affecting the motion of any other inertia element.

It was found that transducer 10 attenuates frequencies below the natural frequency of the transducer at about 18 db/per octave, instead of the common 12 db/octave, in order to have a 6 db/octave enhancement for frequencies above the natural frequency of the transducer.

The greater attenuation of the lower frequencies and the enhancement of the higher frequencies offer remarkable advantages for seismic detection since they compensate automatically for the undesirably high levels of low frequencies, as propagated by the earth, and for the attenuation by the earth of the higher frequencies.

In sum, transducer 10 provides a response which favors higher frequencies, provides greater low-cut filtering, and eliminates the need for pig tail and slip ring connections.

In FIGURES 6-8 is shown a vibration transducer 50 having a case 52 of soft iron magnetic material that is terminated in an end cap 54 of non-magnetic material. Together they constitute a fluid tight housing 55. Its magnetic circuit comprises a cylindrical permanent magnet 56, case 52, and an airgap 53. A ring 57 captivates magnet 56 and centers it with respect to the bottom 58 of case 52. The flux lines in this magnetic circuit flow between the north pole of magnet 56 through airgap 53, case 52, and return to the magnet's south pole. The construction of this magnetic circuit for a single coil is conventional.

In accordance with the present invention, an annular inertia member, preferably in the form of a cylindrical slug 60, surrounds magnet 56 and is situated within airgap 53 coaxially with magnet 56.

A coilform 63 carries a winding 62 of insulated wire and is situated within airgap 53 to intercept the changing magnetic fields produced by the eddy currents flowing in inertia member 60. The currents or voltages induced in coil 62 are proportional to the acceleration, i.e., the rate of change of the velocity of slug 60.

Sufficient clearance is provided within airgap 53 to allow slug 60 to move axially without rubbing or dragging against magnet 56, on one side, and/or against coil 62 on the opposite side. No space is provided between coil 62 and the inner cylindrical wall 64 of case 52. Slug 60 is resiliently suspended from a single disc-shaped spider spring 66 which is retained in place by rings 69 and 70.

0184401

The modified transducer 50' shown in FIGURE 9, is similar to transducer 50, except that slug 60' is now resiliently suspended from a pair of upper and lower disc-shaped spider springs 66'-66''.

It is the function of the spring or springs in transducers 50 and 50' to coaxially maintain slugs 60 and 60' in airgap 53, and to elastically support them for axial movement relative to coaxial magnet 56 and coaxial coil 62.

The operations of transducers 50 and 50' are essentially the same as the previously described operation of transducer 10 and a repetition thereof is believed unnecessary.

0184401

CLAIMS

1. A vibration transducer (10,50) comprising a magnetic circuit having a permanent magnet (16,56) and at least one airgap (19,19'), characterized in that spring means (34-34',66) elastically support an annular, non-magnetic conductor (32,60) within said airgap, an annular coil means (20) is fixedly supported in said airgap without there being relative movement between said coil means and said airgap, so that an electric signal becomes induced in said coil means in response to relative movement between said annular conductor and said airgap, and said signal being related to a parameter of said movement.

2. The transducer according to Claim 1, characterized in that said parameter is the acceleration of said movement.

3. The transducer according to Claims 1 or 2, characterized in that the mass of said conductor is between 20% and 50% of the total mass of said transducer.

4. The vibration transducer (10,50) according to Claims 1 through 3, and further comprising a hollow casing (12,52), and said spring means, said coil means, said non-magnetic conductor, and said permanent magnet are situated inside said casing, characterized in that said coil means and said magnet are stationary relative to said casing, and said spring means elastically support said non-magnetic electric conductor for axial movements relative to said magnet, whereby eddy currents become induced in said conductor which generate said electric signal in said coil means in response to said relative movements between said conductor and said magnet.

5. The transducer according to Claim 4, wherein said casing is a cylinder made of magnetic material, said magnet is a cylinder, said conductor is annular in shape, at least one pole piece (18,18') is situated at one end of said magnet, and said magnet, said pole piece, and said casing forming said magnetic circuit which has said airgap between said pole piece and said casing, characterized in that said conductor is concentrically mounted with said magnet and with said coil means, which is structurally fixed to said casing for encircling said annular conductor.

6. The vibration transducer according to Claim 4 or Claim 5, wherein said casing has a pair of non-magnetic end caps (14,14'), a pair of soft iron pole pieces (18,18') at the opposite ends of said magnet, whereby an airgap is defined between each pole piece and said casing, said spring means include a pair of spider springs (34-34') for maintaining said annular conductor coaxially with said magnet, characterized in that said coil means include a non-magnetic cylinder (22,63) radially spaced from and encircling said conductor, and at least one winding (26a,62) on said non-magnetic cylinder (22).

7. The transducer according to Claims 4 through 6, characterized in that said parameter is the acceleration of said relative movements, and the mass of the conductor is between 20% and 50% of the total mass of the transducer.

8. The transducer according to Claims 1 through 7, characterized in that said transducer has a frequency response which provides a continuously increasing sensitivity for increasing frequency of seismic energy imparted into the earth, thereby substantially overcoming the normal earth's attenuation of higher frequencies.

0184401

1/3

Fig.1

Fig.5

Fig.2

Fig.3

Fig. 4

Fig.7

Fig.9

Fig.6

Fig.8

0184401

3/3